# EUROPEAN PATENT APPLICATION

(11) **EP 3 935 952 A1**
(43) Date of publication of application: **12.01.2022**
(21) Application number: 20769044.7
(22) Date of filing: 03.03.2020
(51) Int. Cl.: A23D 7/00, A23G 9/04, A23G 9/32

(54) **ICE CREAM CONTAINING POLYUNSATURATED FATTY ACIDS**

(30) Priority: 08.03.2019 JP 2019042146; 29.01.2020 JP 2020012350
(71) Applicant: Fuji Oil Holdings Inc., Izumisano-shi, Osaka 598-8540 (JP)
(72) Inventor: MORIKAWA, Miwako, Izumisano-shi, Osaka 598-8540 (JP); KATO, Masaharu, Izumisano-shi, Osaka 598-8540 (JP)
(74) Representative: Becker, Eberhard
(86) International application number: PCT/JP2020/008906
(87) International publication number: WO 2020/184292

(57) **Abstract**

This invention addresses the problem of suppressing deterioration in the flavor of ice cream containing PUFAs over time. This invention was arrived at by discovering that in ice cream containing DHA and/or EPA, abnormal flavors which arise during low-temperature storage can be effectively suppressed when a water phase containing polyphenols is micro-dispersed at 500 nm or less in an oil or fat containing DHA and/or EPA.

## Description

### [Technical Field]

The present invention relates to ice cream containing DHA and/or EPA.

### [Background Art]

Patent Literature 1 relates to frozen desserts for nutritional supplementation, which describes eicosapentaenoic acid (EPA) and docosahexaenoic acid (DHA) as functional components. There is also a description of guava leaf polyphenols.
Patent Literature 2 is an application related to a "fish oil-derived glyceride oil or fat composition and a method of producing the same," and describes that it contains DHA and EPA. In addition, there is a description of ice cream as a foodstuff containing the oil or fat composition. In addition, there is also a description of catechin as an antioxidant.
Patent Literature 3 is an application related to a composition containing lecithin and LC-PUFA, and describes "ice cream" as a foodstuff containing the composition. In addition, there is also a description of an embodiment containing a polyphenol oxidation inhibitor.
Patent Literature 4 is an application related to a "food product for diabetic patients," and describes an embodiment containing LC-PUFA as a lipid, and also describes ice cream as a foodstuff. In addition, there is also a description of polyphenols.
Patent Literature 5 is an application related to a "high-PUFA oil composition," and describes that it is frozen in order to maintain storage stability of a product.

### [Citation List]

### [Patent Literature]

[Patent Literature 1]
   Japanese Patent Laid-Open No. 2015-043757
[Patent Literature 2]
   Published Japanese Translation No. 2010-503748 of the PCT International Publication
[Patent Literature 3]
   Published Japanese Translation No. 2010-535526 of the PCT International Publication
[Patent Literature 4]
   Published Japanese Translation No. 2008-509213 of the PCT International Publication
[Patent Literature 5]
   Published Japanese Translation No. 2008-519129 of the PCT International Publication

### [Summary of Invention]

### [Technical Problem]

An objective of the present invention is to suppress deterioration of flavors over time in ice cream containing polyunsaturated fatty acids.

### [Solution to Problem]

Since frozen desserts such as ice cream are stored at extremely low temperatures, and it is said that they can be stored for a considerable period of time, it is not necessary to display the freshness date or expiration date (Wikipedia "Ice cream," retrieved March 1, 2019 https://ja.wikipedia.org/wiki/%E3%82%A2%E3%82%A4%E3%82%B9%E3%82%AF%E3%83 %AA%E3%83%BC%E3%83%A0). This is because it is thought that, at extremely low temperatures at which ice cream is stored, the change in quality is very small.

Polyunsaturated fatty acids (sometimes abbreviated as PUFA) are fatty acids that are easily oxidized, but it is said that oxidation is more likely to occur at higher temperatures. On the other hand, it is generally thought that oxidation is suppressed at extremely low temperatures. Therefore, as described in Patent Literature 5, a composition containing PUFAs is generally stored in a frozen state.

Based on the above general technical knowledge, it is considered that, in ice cream containing PUFAs, generation of abnormal flavors due to oxidation of PUFAs is suppressed during low-temperature storage. However, the inventors conducted studies and as a result, found that abnormal flavors occur in ice cream containing PUFAs over time. Thus, these abnormal flavors were different from those when PUFAs were oxidized at room temperature. Therefore, they conducted extensive studies in order to suppress the occurrence of these peculiar abnormal flavors.

Some related arts have been identified for ice cream containing PUFAs. However, all of them are limited to description within the range of conventional general technical knowledge, and to begin with, there are no findings regarding recognition of occurrence of abnormal flavors in the ice cream containing PUFAs different from when it is stored at room temperature, nor were any countermeasures investigated.

For example, Patent Literature 1 describes a guava leaf polyphenol, but merely describes that it may be "contained" as a health functional component, and its addition mode and its use as an antioxidant are not disclosed.

The ice cream described in Patent Literature 2 is described only as an example of various foodstuffs, and catechin is also described only as an example of various antioxidants.

In addition, there is no suggestion for combining them. In addition, the mode of adding an antioxidant is not disclosed.

The description of the ice cream in Patent Literature 3 is merely description as an example of various foodstuffs, and the polyphenol oxidation inhibitor is also described only as an example of various antioxidants. In addition, the mode of adding an antioxidant is not disclosed.

"LC-PUFA" described in Patent Literature 4 is only one of many lipids listed, and the ice cream is only one of many foodstuffs listed. Polyphenols are also described only as one of many plant extracts, and their use as antioxidants is not disclosed.

As described above, no hint for solving the problem solved by the present invention could have been obtained from related art.

The inventors conducted further extensive studies. As a result, they found that, in the ice cream containing DHA and EPA, abnormal flavors that occur during low-temperature storage cannot be prevented with vitamin C, which is a general antioxidant, but can be effectively suppressed when a water phase containing polyphenols is micro-dispersed in oils or fats containing DHA and EPA, and thus completed the present invention.

Specifically, the present invention is as follows:
(1) Ice cream which contains a polyphenol-containing water phase which contains 2 to 100 mass% of polyphenols with respect to a total amount of DHA and EPA that is micro-dispersed at a particle size of 500 nm or less in an oil or fat containing DHA and/or EPA, and contains 0.01 to 2 mass% of DHA and EPA in total, and in which the occurrence of abnormal flavors during low-temperature storage is suppressed.
(2) The ice cream according to (1), wherein the polyphenols are derived from one or more selected from among tea polyphenols, apple polyphenols, and grape polyphenols.
(3) The ice cream according to (1) or (2), wherein the ice cream contains 3 mass% or more of milk solids.
(4) A method of producing the ice cream according to any one of (1) to (3), including using a polyphenol-containing water phase that is micro-dispersed at a particle size of 500 nm or less in an oil or fat containing DHA and/or EPA so that the polyphenols are contained in an amount of 2 to 100 mass% with respect to a total amount of DHA and EPA as one raw material.
(5) An oil or fat composition containing polyunsaturated fatty acids for ice cream, in which a water phase containing 3 to 70 mass% of polyphenols is micro-dispersed at a particle size of 500 nm or less in an oil or fat containing DHA and/or EPA and the occurrence of abnormal flavors is suppressed during low-temperature storage.
(6) A method of suppressing the occurrence of abnormal flavors in ice cream containing 0.01 to 2 mass% of DHA and EPA in total during low-temperature storage, including preparing ice cream using an oil or fat composition in which a polyphenol-containing water phase is micro-dispersed at a particle size of 500 nm or less in an oil or fat containing DHA and/or EPA so that the polyphenols are contained in an amount of 2 to 100 mass% with respect to a total amount of DHA and EPA as one raw material.
(7) The method of suppressing the occurrence of abnormal flavors in ice cream containing 0.01 to 2 mass% of DHA and EPA in total during low-temperature storage according to (6), wherein the polyphenols are derived from one or more selected from among tea polyphenols, apple polyphenols, and grape polyphenols.

### [Advantageous Effects of Invention]

According to the present invention, it is possible to provide ice cream with a good flavor containing 0.01 to 2 mass% of DHA and EPA in total by a simple method.

### [Description of Embodiments]

"DHA" referred to in the present invention is an abbreviation for "docosahexaenoic acid." In addition, "EPA" is an abbreviation for "eicosapentaenoic" acid. "PUFA" referred to in the present invention is an abbreviation for "polyunsaturated fatty acid," and is an unsaturated fatty acid having two or more unsaturated bonds. Typical examples thereof include DHA and EPA.

The present invention relates to ice cream having a good flavor and containing 0.01 to 2 mass% of DHA and EPA in total. Needless to say, here, DHA and EPA are included as triglycerides containing the same. A total amount of DHA and EPA is more preferably 0.05 to 1 mass%, and still more preferably 0.05 to 0.5 mass%. When an appropriate amount of DHA and EPA in total is contained, this ice cream can exhibit various physiological effects of DHA and EPA, and the ice cream with a good flavor can be obtained.

The ice cream in the present invention is a cream-frozen confectionery made from milk, sugar, or the like. It more preferably contains 3 mass% or more of milk solids, and still more preferably 10 mass% or more of milk solids, of which 3 mass% or more of a milk fat content is contained, and most preferably 15 mass% or more of milk solids. Here, according to the classification in Japan, ice cream containing 3 mass% or more of milk solids is defined as "lacto ice," and ice cream containing 10 mass% or more of milk solids, of which 3 mass% or more of a milk fat content is contained, is defined as "ice milk," but the concept of ice cream in the present invention includes all of these.

In the present invention, when an appropriate amount of milk solids is contained, the ice cream according to the present invention has a better flavor.

The ice cream according to the present invention contains a water phase containing polyphenols. More preferable examples of polyphenols include tea polyphenols, apple polyphenols, and grape polyphenols. Tea polyphenols and apple polyphenols are more preferable, and tea polyphenols are still more preferable. When an appropriate polyphenol is used, ice cream with a good flavor can be obtained.

Here, in addition to polyphenols as active components, natural product extracts and the like may contain other components. However, in the present invention, an agent mainly composed of polyphenols is also simply referred to as polyphenol.

A water phase containing polyphenols preferably contains 3 to 70 mass% of polyphenols. This amount is more preferably 15 to 70 mass%, and still more preferably 30 to 70 mass%. If the concentration of polyphenols in the water phase is appropriate, ice cream with a good flavor can be obtained.

It is preferable for water-soluble components to coexist in the water phase containing polyphenols in addition to polyphenols. The water-soluble components are preferably carbohydrates, and specifically, sugars, sugar alcohols, and dextrin may be exemplified. The coexistence of such water-soluble components further suppresses the occurrence of abnormal flavors in the ice cream.

In the present invention, the water phase containing polyphenols needs to be micro-dispersed in an oil or fat containing DHA and/or EPA. Here, the micro-dispersion is a state in which particles are finely dispersed. The particle size needs to be 500 nm or less. When the particle size is 500 nm or less, ice cream with a good flavor can be obtained.

In the ice cream according to the present invention, it is preferable to contain 0.001 to 100 mass% of polyphenols with respect to a total amount of DHA and EPA. This amount is more preferably 0.01 to 50 mass%, and still more preferably 0.1 to 20 mass%. Of course, polyphenols referred to here that are contained in the water phase need to be present in a state in which they are micro-dispersed in an oil or fat containing DHA and/or EPA.

When an appropriate amount of polyphenols with respect to a total amount of DHA and EPA is contained, ice cream that has a good flavor while exhibiting the effects of DHA and EPA can be obtained.

Next, a method of producing ice cream according to the present invention will be described with an example.

In the present invention, first, a water phase containing polyphenols is prepared. In the water phase, in addition to polyphenols, water-soluble components are appropriately dissolved.

In addition, an oil or fat containing DHA and/or EPA is prepared. Various edible oils or fats can be used as an oil or fat other than DHA and EPA. In addition, the oil or fat prepared here is referred to as an oil phase. In the oil phase, an emulsifier is dissolved as necessary.

Next, the water phase is put into the oil phase and emulsified into a water-in-oil type. Various emulsifying devices can be used for emulsification. Specifically, a high-pressure homogenizer may be exemplified. Thereby, the water phase is micro-dispersed in the oil phase.

The obtained emulsion is used as a material for ice cream and ice cream is prepared. The ice cream is prepared by a conventional method.

The present invention can also provide a method of suppressing the occurrence of abnormal flavors in the ice cream containing 0.01 to 2.0 mass% of DHA and EPA in total during low-temperature storage. In such storage of ice cream, a method of suppressing the occurrence of abnormal flavors over time is not yet known, and according to the present invention, the ice cream in which the occurrence of abnormal flavors during storage is suppressed and which contains 0.01 to 2.0 mass% of DHA and EPA in total can be obtained.

In addition, the present invention provides an oil or fat composition containing polyunsaturated fatty acids for the ice cream in which the occurrence of abnormal flavors during low-temperature storage is suppressed. Although oils or fats containing DHA and EPA themselves are known, it is not yet known what kinds of oils or fats are suitable when used in order to suppress the occurrence of abnormal flavors in the ice cream during low-temperature storage. According to the present invention, an oil or fat composition containing PUFAs suitable for the application has been clarified.

Hereinafter, examples will be described.

### Examples

### Examination 1 Preparation of oils or fats containing polyphenols

Oils or fats containing polyphenols were prepared according to Table 1-1. A preparation method was in accordance with "∘ Method of preparing oils or fats containing polyphenols." The size of the water phase particles was in accordance with "∘ Method of measuring a water phase particle size."

**∘Table 1-1 Formulation**

| | | Control | Comparative Example 1-1 | Comparative Example 1-2 | Example 1-1 | Example 1-2 | Example 1-3 | Example 1-4 |
|---|---|---|---|---|---|---|---|---|
| Oil phase | Edible oils and fats | 100% | 97.318% | 97.319% | 97.318% | 97.343% | 97.318% | 97.318% |
| | PUFA-containing oils or fats | - | 2.234% | 2.234% | 2.234% | 2.236% | 2.234% | 2.234% |
| | Emulsifier 1 | - | 0.127% | 0.127% | 0.127% | 0.119% | 0.127% | 0.127% |
| Water phase | Sodium ascorbate | - | 0.127% | - | 0.097% | 0.060% | 0.030% | - |
| | Polyphenol 1 | - | - | - | 0.030% | 0.060% | 0.097% | 0.127% |
| | Sugar | - | 0.049% | 0.049% | 0.049% | 0.046% | 0.049% | 0.049% |
| | Water | - | 0.145% | 0.271% | 0.145% | 0.136% | 0.145% | 0.145% |
| Total | | 100.000% | 100.000% | 100.000% | 100.000% | 100.000% | 100.000% | 100.000% |
| Amount of polyphenols in water phase (mass%) | | | - | - | 9.4% | 19.8% | 30.3% | 39.6%% |
| Size of water phase particle (nm) | | - | 500 nm or less | 500 nm or less | 500 nm or less | 500 nm or less | 500 nm or less | 500 nm or less |

| | | | | | | | | |
|---|---|---|---|---|---|---|---|---|
| (formulation unit is mass%) | | | | | | | | |

- For edible oils or fats, a mixed oil containing fractionated palm oil, coconut oil, and soybean oil (all commercially available from Fuji Oil Co., Ltd.) was used.
- For oils or fats containing PUFAs, oils or fats containing 44.8 mass% of DHA and EPA in total were used.
- For emulsifier 1, polyglycerin condensed ricinoleic acid ester "CRS-75" (commercially available from Sakamoto Yakuhin Kogyo Co., Ltd.) was used.
- For polyphenol 1, tea extract "Sunphenon 90S" (commercially available from Taiyo Kagaku Co., Ltd.) was used.

### ∘ Method of preparing oils or fats containing polyphenols

1 An oil phase and a water phase were prepared according to the formulation.
2 The water phase was added while stirring the oil phase to obtain almost a water-in-oil emulsion.
3 It was emulsified into a water-in-oil emulsion with a high-pressure homogenizer (37 Mpa, 20 passes).

### ∘ Method of measuring a water phase particle size

In the present invention, the particle size was measured according to the following device and conditions.

Device name: Zetasizer Nano S, manufacturer: Malvern
10 µl of an oil or fat composition to be measured was diluted with 2 ml of hexane and measurement was performed. (at a measurement stage of the first day after the sample was prepared, if the particle size was 500 nm or more (that is, if precipitation occurred), failure was determined)
Temperature: 20.0 °C
Equilibrium time: 240 seconds
Cell: glass cell
Measurement angle: 173°
Positioning method: optimal position selection
Automatic damping selection: yes

### Examination 2 Preparation of ice cream

Ice cream was prepared using the sample prepared in Examination 2. The formulation was according to Table 2-1. The ice cream was prepared according to "o Method of preparing ice cream."

The obtained ice cream was stored at -20 °C for 21 days, and then subjected to sensory evaluation. The method was in accordance with "o Sensory evaluation method." The results are shown in Table 2-2.

**Table 2-1 Formulation of ice cream**

| | Control ice cream | Comparative Example 2-1 | Comparative Example 2-2 | Example 2-1 | Example 2-2 | Example 2-3 | Example 2-4 |
|---|---|---|---|---|---|---|---|
| Oil or fat obtained in "control" | 10.00 | - | - | - | - | - | - |
| Oil or fat obtained in Comparative Example 1-1 | - | 10.00 | - | - | - | - | - |
| Oil or fat obtained in Comparative Example 1-2 | - | - | 10.00 | - | - | - | - |
| Oil or fat obtained in Example 1-1 | - | - | - | 10.00 | - | - | - |
| Oil or fat obtained in Example 1-2 | - | - | - | - | 10.00 | - | - |
| Oil or fat obtained in Example 1-3 | - | - | - | - | - | 10.00 | - |
| Oil or fat obtained in Example 1-4 | - | - | - | - | - | - | 10.00 |
| Skim milk powder | 8.00 | 8.00 | 8.00 | 8.00 | 8.00 | 8.00 | 8.00 |
| Sugar | 10.40 | 10.40 | 10.40 | 10.40 | 10.40 | 10.40 | 10.40 |
| Dextrin 1 | 5.00 | 5.00 | 5.00 | 5.00 | 5.00 | 5.00 | 5.00 |
| Fragrance material | 0.05 | 0.05 | 0.05 | 0.05 | 0.05 | 0.05 | 0.05 |
| Emulsifier 2 | 0.20 | 0.20 | 0.20 | 0.20 | 0.20 | 0.20 | 0.20 |
| Water | 66.35 | 66.35 | 66.35 | 66.35 | 66.35 | 66.35 | 66.35 |
| Total | 100.00 | 100.00 | 100.00 | 100.00 | 100.00 | 100.00 | 100.00 |
| DHA+EPA (mass%) | | 0.10 | 0.10 | 0.10 | 0.10 | 0.10 | 0.10 |
| Polyphenol/(DHA+EPA)(%) | | - | - | 3.00 | 5.95 | 9.69 | 12.69 |
| Milk solid (mass%) | 7.70 | 7.70 | 7.70 | 7.70 | 7.70 | 7.70 | 7.70 |
| (formulation unit is mass%) | | | | | | | |

- For dextrin 1, "Sandex #250" (commercially available from Sanwa Starch Co., Ltd.) was used.
- For emulsifier 2, glycerin fatty acid ester "Emulsifier MS" (commercially available from Riken Vitamin Co., Ltd.) was used.

### ∘ Method of preparing ice cream

1 Emulsifier 2 was dissolved in hot water at 70 °C, and skim milk powder, dextrin 1, sugar, and a fragrance material were additionally mixed according to the formulation.
2 The oil or fat to be tested was added, and the mixture that was kept at 70 °C was then stirred at 8,000 rpm for 10 minutes using a homomixer.
3 The mixture was emulsified at 15 Mpa using a high-pressure homogenizer.
4 The emulsified liquid in 3 was sterilized at 70 °C for 30 minutes and aged at 5 °C overnight.
5 The liquid was frozen in a commercially available ice creamer to prepare ice cream.

### ∘ Sensory evaluation method

1 The ice cream prepared according to "o Method of preparing ice cream" was stored at -20 °C for 21 days.
2 The ice cream was left at room temperature for 15 minutes.
3 Three panelists tasted and scored according to the following criteria after discussion.

### 1 point

Those in which abnormal flavors were perceived as compared with a control ice cream.

### 2 points

Those that were perceived to be slightly different from those of a control ice cream, but could not said to have abnormal flavors.

### 3 points

Those that were determined to be equivalent to those of a control ice cream.

Two or more points was determined to be satisfactory.

**Table 2-2 Results of sensory evaluation**

| | Comparative Example 2-1 | Comparative Example 2-2 | Example 2-1 | Example 2-2 | Example 2-3 | Example 2-4 |
|---|---|---|---|---|---|---|
| Evaluation result | 1 | 1 | 2 | 3 | 3 | 3 |

### Consideration

- In Comparative Example 2-1 using only sodium ascorbate, which is a general antioxidant, abnormal flavors occurring at low temperatures could not be suppressed, and abnormal flavors equivalent to those of Comparative Example 2-2 using no antioxidant were perceived.
- According to Examples 2-1 to 2-4, it was observed that abnormal flavors were suppressed by increasing a proportion of polyphenols used as an antioxidant.
- Here, sodium ascorbate had an effect of sufficiently suppressing oxidation of PUFA at room temperature to high temperatures. However, in the ice cream, sodium ascorbate had almost no effect of suppressing abnormal flavors, and when polyphenols were used, an effect of specifically suppressing abnormal flavors was confirmed.

### Examination 3 Preparation of oils or fats containing polyphenols 2

Oils or fats containing polyphenols were prepared according to Table 3-1. A preparation method was in accordance with "∘ Method of preparing oils or fats containing polyphenols." The size of the water phase particles was in accordance with "o Method of measuring a water phase particle size."

**∘Table 3-1 Formulation**

| | | Example 3-1 | Example 3-2 |
|---|---|---|---|
| Oil phase | Edible oils and fats | 97.44 | 97.44 |
| | PUFA-containing oils or fats | 2.13 | 2.13 |
| | Emulsifier 1 | 0.15 | 0.15 |
| Water phase | Polyphenol 2 | 0.04 | - |
| | Polyphenol 3 | - | 0.04 |
| | Sugar | 0.09 | 0.09 |
| | Water | 0.15 | 0.15 |
| Total | | 100.00 | 100.00 |
| Amount of polyphenols in water phase (mass%) | 14.4% | 14.4% | |
| Size of water phase particle (nm) | 500 nm or less | 500 nm or less | |
| (formulation unit is mass%) | | | |

- For edible oils or fats, a mixed oil containing fractionated palm oil, coconut oil, and soybean oil (all commercially available from Fuji Oil Co., Ltd.) was used.
- For oils or fats containing PUFAs, oils or fats containing 44.8 mass% of DHA and EPA in total were used.
- For emulsifier 1, polyglycerin condensed ricinoleic acid ester "CRS-75" (commercially available from Sakamoto Yakuhin Kogyo Co., Ltd.) was used.
- For polyphenol 2, apple extract "Applephenon SH" (commercially available from Asahi Food & Healthcare, Ltd.) was used.
- For polyphenol 3, grape extract "GRAPE SEED EXTRACT" (commercially available from Indena Japan Co., Ltd.) was used.

### Examination 4 Preparation of ice cream

Ice cream was prepared using the sample prepared in Examination 2. The formulation was according to Table 4-1. The ice cream was prepared according to "o Method of preparing ice cream."

The obtained ice cream was stored at -20 °C for 21 days, and then subjected to sensory evaluation. The method was in accordance with "o Sensory evaluation method." The results are shown in Table 4-2.

**Table 4-1 Formulation of ice cream**

| | Example 4-1 | Example 4-2 |
|---|---|---|
| Oil or fat obtained in Example 3-1 | 10.00 | - |
| Oil or fat obtained in Example 3-2 | - | 10.00 |
| Skim milk powder | 8.00 | 8.00 |
| Sugar | 10.40 | 10.40 |
| Dextrin 1 | 5.00 | 5.00 |
| Fragrance material | 0.05 | 0.05 |
| Emulsifier 2 | 0.20 | 0.20 |
| Water | 66.35 | 66.35 |
| Total | 100.00 | 100.00 |
| DHA+EPA (mass%) | 0.10 | 0.10 |
| Polyphenol/(DHA+EPA)(%) | 4.19 | 4.19 |
| Milk solid (mass%) | 7.70 | 7.70 |
| (formulation unit is mass%) | | |

- For dextrin 1, "Sandex #250" (commercially available from Sanwa Starch Co., Ltd.) was used.
- For emulsifier 2, glycerin fatty acid ester "Emulsifier MS" (commercially available from Riken Vitamin Co., Ltd.) was used.

**Table 4-2 Results of sensory evaluation**

| | Example 4-1 | Example 4-2 |
|---|---|---|
| Evaluation result | 3 | 3 |

### Consideration

- It was confirmed that, in the ice cream containing a predetermined amount of PUFA, abnormal flavors occurring during frozen storage of the ice cream were able to be significantly suppressed when a polyphenol material was used.

## Claims

1. Ice cream which contains a polyphenol-containing water phase which contains 2 to 100 mass% of polyphenols with respect to a total amount of DHA and EPA that is micro-dispersed at a particle size of 500 nm or less in an oil or fat containing DHA and/or EPA, and contains 0.01 to 2 mass% of DHA and EPA in total, and in which the occurrence of abnormal flavors during low-temperature storage is suppressed.

2. The ice cream according to claim 1, wherein the polyphenols are derived from one or more selected from among tea polyphenols, apple polyphenols, and grape polyphenols.

3. The ice cream according to claim 1 or 2, wherein the ice cream contains 3 mass% or more of milk solids.

4. A method of producing the ice cream according to any one of claims 1 to 3, comprising using a polyphenol-containing water phase that is micro-dispersed at a particle size of 500 nm or less in an oil or fat containing DHA and/or EPA so that the polyphenols are contained in an amount of 2 to 100 mass% with respect to a total amount of DHA and EPA as one raw material.

5. An oil or fat composition containing polyunsaturated fatty acids for ice cream, in which a water phase containing 3 to 70 mass% of polyphenols is micro-dispersed at a particle size of 500 nm or less in an oil or fat containing DHA and/or EPA and the occurrence of abnormal flavors is suppressed during low-temperature storage.

6. A method of suppressing the occurrence of abnormal flavors in ice cream containing 0.01 to 2 mass% of DHA and EPA in total during low-temperature storage, comprising preparing ice cream using an oil or fat composition in which a polyphenol-containing water phase is micro-dispersed at a particle size of 500 nm or less in an oil or fat containing DHA and/or EPA so that the polyphenols are contained in an amount of 2 to 100 mass% with respect to a total amount of DHA and EPA as one raw material.

7. The method of suppressing the occurrence of abnormal flavors in ice cream containing 0.01 to 2 mass% of DHA and EPA in total during low-temperature storage according to claim 6, wherein the polyphenols are derived from one or more selected from among tea polyphenols, apple polyphenols, and grape polyphenols.
